# EUROPEAN PATENT SPECIFICATION

(11) **EP 2 076 887 B1**
(45) Date of publication and mention of the grant of the patent: **11.12.2019**
(21) Application number: 07844079.9
(22) Date of filing: 10.10.2007
(51) Int. Cl.: G06T 19/00

(54) **FOLLOWER METHOD FOR THREE DIMENSIONAL IMAGES**
FOLGERVERFAHREN FÜR DREIDIMENSIONALE BILDER
PROCÉDÉ DE SUIVI POUR DES IMAGES TRIDIMENSIONNELLES

(30) Priority: 11.10.2006 US 545773
(43) Date of publication of application: 08.07.2009
(73) Proprietor: Dassault Systèmes, 78140 Vélizy-Villacoublay (FR)
(72) Inventor: GRIMAUD, Jean-Jacques, Winchester, MA 01890 (US); DUGALAIS, James, 06560 Valbonne (FR); PICCUEZZU, Eric, 06100 Nice (FR)
(74) Representative: Bandpay & Greuter
(86) International application number: PCT/US2007/080937
(87) International publication number: WO 2008/045934

(56) References cited:
- EP-A2- 1 035 464
- US-A- 4 754 267
- US-A- 5 377 314
- US-A- 5 815 150
- US-A- 5 861 885
- US-A1- 2006 103 669
- US-B1- 6 346 940
- Norbert Haala ET AL: "PROCESSING OF 3D BUILDING MODELS FOR LOCATION AWARE APPLICATIONS", , 1 October 2002 (2002-10-01), XP055304479, Retrieved from the Internet: URL:http://www.isprs.org/proceedings/XXXIV /part3/papers/paper139.pdf [retrieved on 2016-09-21]
- AZAM KHAN ET AL: "HoverCam", PROCEEDINGS OF THE 2005 SYMPOSIUM ON INTERACTIVE 3D GRAPHICS AND GAMES , SI3D '05, ACM PRESS, NEW YORK, NEW YORK, USA, 3 April 2005 (2005-04-03), pages 73-80, XP058274181, DOI: 10.1145/1053427.1053439 ISBN: 978-1-59593-013-2
- J Huang ET AL: "Interactive transparency rendering for large CAD models", IEEE Transactions on Visualization and Computer Graphics, 1 September 2005 (2005-09-01), pages 584-595, XP055337657, New York DOI: 10.1109/TVCG.2005.82 Retrieved from the Internet: URL:http://ieeexplore.ieee.org/ielx5/2945/ 31533/01471695.pdf?tp=&arnumber=1471695&is number=31533 [retrieved on 2017-01-23]

## Description

### BACKGROUND OF THE INVENTION

### Field Of The Invention

The present invention relates to the field of three-dimensional computer models and more particularly, to computer-based methods and software that enable a user to interact with a three-dimensional image.

### Description Of The Related Art

There are, of course, many different tools used by computer applications that operate on three-dimensional models or images to perform various tasks. In some applications, a pointer may used to follow a surface. For example, in an application developed by the common assignee, Seemage, Inc., a pointer or cursor in the shape of a "toy top" indicates the normal to the surface on which the pointer is moving. This "top" pointer may be used to position a tool (for example, a cutting plane) which will be placed orthogonally to the axis of the pointer, or to position a viewpoint along the axis of the pointer.

Although these methods are very useful methods of interacting with three-dimensional computer models and images, these applications assume that the view of the part on which the point rests is unimpeded or unencumbered by other parts or assemblies located in front of the part which the user wishes to follow or to otherwise interact. More specifically, in the method described above, when the "toy top" pointer encounters the surface of another part in front of or otherwise blocking the selected part on which the pointer located, the pointer "jumps" to the surface of the part or assembly obstructing the view of the originally, selected part and does not remain on the surface of the original part.

Current methods of viewing three-dimensional, objects such as piping also include using two-dimensional drawings in attempting to follow the entire piping line. However, when many lines are present or where there are other obstructions, following a particular line is no longer a practical possibility.

Another method of somewhat related interest is disclosed in U.S. Patent No. 5,182,775 to Matsui et al and involves performing differential analysis on a radiographic image of a pipe to detect the defects in the welding of the pipe. However, among many other differences, this approach is not interactive and uses differential analysis to provide a picture of the defects.

Other patents of potential interest include US Patent Nos. 5,467,441; 5,617,114; 5,729,704; and 5,818,455 and European Patent Specification EP 0 636 971 B1. For example, the first of these patents discloses a method for operating on an object-based model data structure from which a first image has been produced wherein the object-based model data structure is used to produce a second image having added, replaced or deleted objects. In the latter instance, objects can be deleted to reveal otherwise hidden objects. The second patent relates to a user interface having click-through tools that can be composed with other tools. The tools include click-through buttons with visual filters.

Reference is also made to commonly assigned, co-pending Application Serial No. 10/532,305, which is hereby incorporated by reference in its entirety and for all purposes. This patent application discloses a device that enables newly defined attributes to "locked" so that they are retained during subsequent modifications of the camera position. The device is advantageously equipped with a "following mode" by means of which a zone of influence in two dimensions follows the locked object when the camera position is modified. US6346940 discloses "an image processing system displaying an endoscopic image of a three-dimensional object from a desired viewpoint position and view direction".

### SUMMARY OF THE INVENTION

According to one aspect of the invention a method is provided which affords a user with the ability to view, interactively, a selected part in its entirety, or to view elements of a part, when other objects, parts or assemblies would otherwise have obstructed such viewing and as the part is being followed throughout a portion or the whole of the extent thereof. It should be understood that merely extracting the part and making invisible the surroundings of the part is not an adequate solution to the basic problem to be solved here. In this regard, it is usually necessary to provide the context or background associated with the selected part so as to enable immediate recognition and ready understanding of the place of the selected part in the assembly. Moreover, particular problems are presented in attempting to follow a part throughout the extent thereof in that new view obstructing objects may be encountered and, in addition, a screen boundary may be reached that inhibits further following of the part.

As will appear, embodiments of the invention can be used in many types of domains and platforms. For surfacic three-dimensional models, embodiments can be used for all types of models (e.g., NURBS, other b-rep defined surfaces, polygonal models, etc.) In AEC, embodiments can be used, for example, to enable a user to follow pipes, conduits, air ducts, and wires within a building. For aerospace and discrete manufacturing applications, embodiments enable the user to follow hydraulic or pneumatic tubes and conduits, cables, electrical wires, and the like, which are part of harnesses. In oil exploration, oil exploitation, and chemical production and for applications such as oil refineries and chemical plants, embodiments of the invention enable following pipes obscured by other pipes, processing units, or other constructions.

For volumetric models, embodiments of the invention can be used for mining applications wherein the user is enabled to follow shafts, vents, and dykes, in oil exploration and oil field exploration as mentioned above, wherein the user is enabled to follow drilling paths, rock strata, and boundaries of geological formation and in medical applications, wherein embodiments enable a user to follow, for example, veins, arteries, lymph and bile ducts, the nervous system, and surfaces of organs.

Another use is following flow in applications using scalar fields or vector fields (e.g., fluid flow, etc). While another use is in following a sequence, such as a series of weld points or weld lines.

Embodiments of the invention also enable viewing a three-dimensional model or image in conjunction with the physical objects made from that model or from a model derived from a physical object. This can accomplished through direct viewing in situ or through remote viewing. Embodiments also enable the user to look at the physical objects and at the model and decide on any action to be taken. This feature is very useful in many domains, including, for example, firefighting, chemical, and security applications, servicing and repairs, and medical and surgical procedures. Simple examples include determining where to make a hole in a wall from the outside of a building in order to provide access to a given object (a pipe, electrical box, or the like), or where to dig to provide access to a buried object.

In accordance with one aspect of the invention, there is provided a method for following a geometrical feature of a selected part in a three-dimensional computer model including the part, said model being displayed on a computer screen and said method comprising the steps of:
selecting a part from a three-dimensional computer model; and
following the part along a geometrical feature thereof while (i) simultaneously and automatically removing any obstacles in the three-dimensional model that impede viewing of the part so as to permit viewing of the part as the part is being followed and (ii) repositioning the model on the computer screen so as to display a further portion of the model that was not previously displayed and that is located in the direction in which the part is being followed to thereby enable the feature to be followed further in that direction.

Preferably, selection of the part includes initially automatically removing any obstacles from the three-dimensional model that impede viewing of the selected part. In one preferred embodiment, selecting the part from the three-dimensional model comprises using a cursor to select the part. In another preferred embodiment, selecting the part from the three-dimensional model comprises selecting the part from a directory tree structure. In another preferred embodiment, selecting the part from the three-dimensional model comprises filtering out all layers of the three-dimensional model except a layer containing the part. In an advantageous implementation, the step of following the part comprising automatically following the part at a predetermined speed selected by the user.

Preferably, the step of following the part comprises using a cursor to follow the selected part on a screen displaying the three-dimensional image.

In one preferred embodiment, wherein the part is represented by a parametric curvilinear model, a viewpoint for viewing the curvilinear model is provided within a viewing plane normal to a line tangent to the curvilinear model. Advantageously, a new tangent is established for each change in the geometry of the curvilinear model.

In another preferred embodiment, a plane normal to a selected surface of the selected part is computed, and a point of view, from which the selected part is viewed in the three-dimensional computer model, is defined with respect to the normal plane.

The step of following the selected part comprises moving a cursor along the selected part while constraining movement of the cursor to the selected part. In constraining the movement of the cursor to the selected part, movement of an input device for controlling the cursor effects movement of the cursor only when a component of the movement of the cursor is within the limits of the selected part.

In one preferred embodiment the selected part comprises an assembly of sub-parts. Advantageously, in one implementation, the assembly of sub-parts is defined through a merge operation. In another advantageous implementation, the assembly of sub-parts is based on a common property of the sub-parts. In another preferred embodiment, the selected part supply comprises a single discrete part.

In a preferred embodiment, wherein the three-dimensional computer model comprises a volumetric model, the selected part is followed using a cursor and movement of the cursor is constrained to the selected part using values within one of a scalar field, a vector field and a tensorial field.

In an advantageous implementation, an audio output is used in association with the following of the selected part. In one preferred embodiment, a cursor is used in following the selected part, and the audio output comprises a continuous tone that is produced so long as the cursor is following the selected part.

In another implementation wherein an audio output is used, a cursor, constrained to the selected part, is used to follow the part, and wherein the audio output is used to provide an indication as to when the selected part is not followed. Preferably, the audio output comprises an audible alert produced when the selected part is not followed.

In a further preferred embodiment, the audio output comprises an audible alert produced in response to an incongruity encountered during in the step of following of the selected part.

In one preferred implementation, a series of points is used in representing the geometrical feature of the selected part. As discussed below, this implementation is useful in connection with following a series of weld points or the like.

Preferably, orientation of the point of view of the three-dimensional model presented to a user is varied such that an angle defined between a line coincident with the direction of view and a tangent to the geometrical feature remains constant.

In a preferred embodiment, wherein the geometrical feature is a surface of the selected part, an angle between a line coincident with the direction of view and a line normal to the surface is maintained constant.

Preferably, when there is a change in the continuity of the selected part the computer model is immediately moved to a new orientation from the orientation prior to the change in continuity. An alert is preferably provided to the user when a said change in continuity occurs.

In a further preferred embodiment, a cursor moving within a viewport in which the three-dimensional model is viewed is used in following the selected part, and, when the cursor moves to a point at a boundary of the viewport, the viewport is translated so as to enable the cursor to continue to follow the selected part.

In an advantageous embodiment, information based on calculations made with respect the selected part is also presented to a user. This feature is discussed in more detail below.

In accordance with a further aspect of the invention, there is provided a computer-based method for enabling a selected part of a three-dimensional image on a screen to be followed throughout the three-dimensional image, said method comprising the steps of: selecting a part included in a three-dimensional image on a viewing screen; removing any obstacles included in the three-dimensional image that impede viewing of the selected part; moving a cursor along the selected part while constraining movement of the cursor to the selected part; and while moving the cursor, automatically removing, in a selected area of the screen, any further obstacles appearing in front of the part that impede viewing of the part during moving of the cursor along the part so that the cursor can follow the geometry of the part, and thereby provide a user with an unimpeded view of the selected part in said selected area of the screen during said moving of the cursor in following the geometry of the part.

In one preferred embodiment, the selected area comprises a selected portion of the screen including at a part of the three-dimensional image. Alternatively, the selected area comprises the entirety of the screen.

In one preferred embodiment, the selected part is selected using a tree structure. In another preferred embodiment, the selected part is selected by filtering using an identifier associated with the part. In one implementation, the identifier comprises a name of the selected part. Alternatively, the identifier comprises a property of the selected part.

Preferably, in the automatically removing step, obstacles that are removed are completely removed from the screen. In alternative preferred embodiment, in the automatically removing step, obstacles that are removed remain as ghost images on the screen.

Preferably, the selected area follows a projection of the cursor onto a geometrical feature of the part. In a preferred implementation, the geometrical feature comprises one of a surface curvature, an edge and a vertex.

In a preferred embodiment, the selected area comprises a circle centered on the nearest point of a line of selection appearing on a curved geometrical feature of the selected part.

In one preferred embodiment, the user is provided with a static point of view in viewing the image. In an alternative preferred embodiment, the user, in viewing the image, is provided with a point of view that is always centered on the cursor. In another alternative preferred embodiment, the user, in viewing the image, is provided with a point of view that changes when the cursor nears a boundary of the viewing area.

As indicated above, the selected part may comprise a plurality of sub-parts, i.e., may be a subassembly of parts rather than a single discrete part.

In accordance with a further aspect of the invention, there is provided a method for following a geometrical feature of a selected part in a three-dimensional computer model displayed on a viewing screen of a computer device including a keyboard, said method comprising the steps of:
accessing a part to be selected by removing any.obstacles in the three-dimensional model that impede viewing of the part in response to depressing a first key of the keyboard;
selecting the part using a second key;
moving a cursor along a geometrical feature of the selected part so as to follow the geometrical feature; and
while moving the cursor, automatically removing any further obstacles appearing in front of the part that impede viewing of the part during moving of the cursor along the part so that the cursor can follow the geometrical feature of the part and thereby provide a user with an unimpeded view of the selected part during said moving of the cursor,
wherein as the cursor is moved, the view of the model displayed on the screen is changed so as to display a further portion of the model located in the direction of cursor movement that was not previously displayed.

Preferably, the view is changed when the cursor is moved to a boundary of the viewing screen in following the geometrical feature, and the view of the model provided on the viewing screen is moved so that the further portion of the model is a portion of the model that was previously outside of the boundary in the direction of the cursor movement.

Advantageously, the view is changed each time that the cursor is moved to a boundary, and the view of the model displayed on the screen and the position of the cursor on the screen are moved such that the position of the cursor on the screen is returned to a central area of the screen, whereby further movement of the cursor in following the geometrical feature continues from said central area.

Preferably, said removing of further obstacles comprises presenting the obstacles in ghost lines so as to enable viewing of the part through the obstacles.

Other features and advantages of the present invention will be set forth in, or apparent from, the detailed description of preferred embodiments that follows.

### BRIEF DESCRIPTION OF THE DRAWINGS

Figure 1 is a flow chart of a follower method in accordance with one preferred embodiment of the invention;
Figures 2(a) and 2(b) are highly schematic front elevational views of a viewport and selected part, used in explanation of aspects of the follower operation;
Figures 3(a) and 3(b) are highly schematic front elevational views similar to those of Figures 2(a) and 2(b), used in explanation of further aspects of the follower operation;
Figure 4 is a highly schematic top plan view used in explanation of a further aspect of the follower operation;
Figure 5 is a highly schematic perspective view used in explanation of a further operational feature;
Figures 6(a), 6(b) and 6(c) are highly schematic perspective views illustrating further operational aspects;
Figures 7(a), 7(b) and 7(c) are highly schematic perspective views used in explanation of three different implementations or embodiments of the follower method; and
Figure 8 is a flow chart of a follower method in accordance with a further preferred embodiment of the invention.

### DETAILED DESCRIPTION OF THE PREFERRED EMBODIMENTS

As indicated above, according to an important aspect of the invention, a computer-based method is provided which enables a selected part or assembly to be followed throughout a three-dimensional image or computer model. As an initial step, the user selects the desired part to be followed and viewed. In preferred embodiments, to enable the viewing of the desired part, the method provides for automatically removing other objects, layers, or other obstacles or obstructions that prevent direct viewing of the part. For example, if the part to be followed is a particular wiring conduit, pipe or duct in a building, or in part of a building, the method provides for removing from the image as viewed, from the point of view or perspective of the user, all objects, such as walls, insulation, and the like. This enables the user to initially view and then follow the selected part directly in the three dimensional representation. In following the part, other objects and obstacles to viewing of the selected part are automatically removed as the part is being followed. In preferred embodiments, the removal of obstacles or impediments to viewing the part is limited to an area around a center point defined by the projection of the point of view or chosen perspective onto the selected part. As indicated above, the method may also be used to follow an assembly of individual parts. The method may be implemented as a stand-alone tool or mode, or as a non-exclusive mode in conjunction with another modeling tool application, wherein the navigational tools provided by the application are constrained by the method.

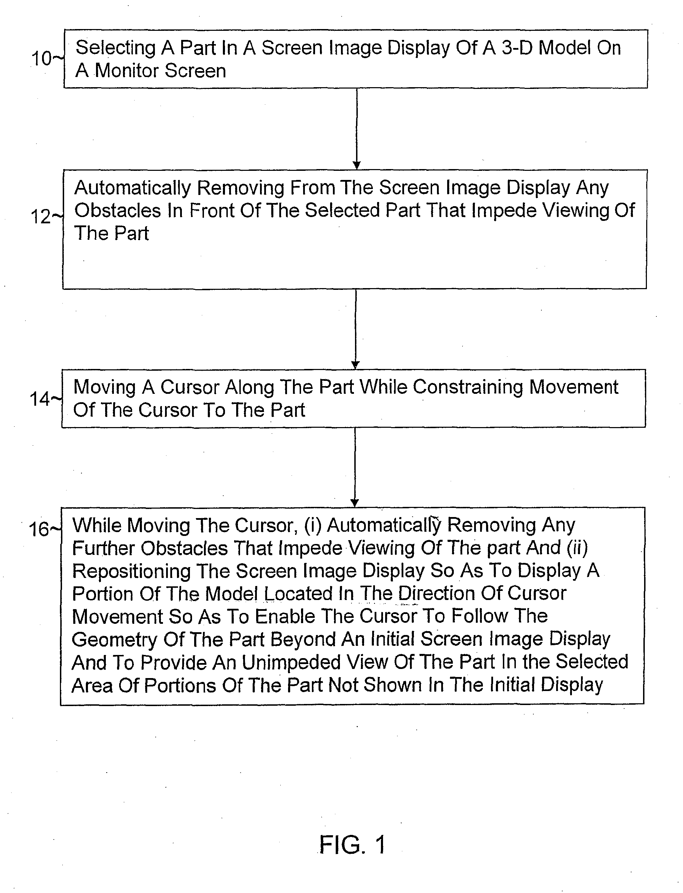

Referring to Figure 1, there is shown a block diagram flow chart of a method in accordance with one preferred embodiment of the invention. Different preferred embodiments and implementations of the method of the invention, wherein steps shown in Figure 1 are omitted or modified or different steps are employed, are discussed below. In the method illustrated, a three-dimensional image or model of a construct, object or other assembly is viewed by the user on a screen and, as discussed, many different images or models in many different fields can be employed.

As shown in Figure 1, in a first step 10, a user selects a particular, desired part, or assembly of parts, within the three dimensional image the route, course, or extent of which the user desires to follow throughout the three-dimensional image. The user may select the desired part by using one of several different techniques. For example, in one embodiment, the user selects the desired part manually and interactively by selecting the part with a cursor or other selecting icon provided on the viewing screen. The user may also select the part by using a menu or directory tree structure. In this embodiment, each part or assembly of parts contained in the image is provided an associated identifier included in a directory tree structure and correlated with the parts of the three-dimensional image on the screen. In selecting the part, the user selects the identifier associated with the desired part or assembly from the directory tree. In another embodiment, the user selects the desired part by filtering out the undesired parts. For example, by using the directory tree, the user may select a filter feature to eliminate the parts, categories of parts, or other assemblies included in the three-dimensional image that the user does not wish to follow. As indicated above, in surfacic 3D models, rather than select a single discrete part, a further option is for the user to select an assembly of parts, i.e., the "part" selected may actually be an assembly of sub-parts. This assembly can be defined through a merge operation by a virtue of a common property of the selection or using another method.

As indicated by block or step 12, in a preferred embodiment, other parts are automatically removed in an initial step when the desired part is selected. The parts that are removed may completely disappear or may remain on the screen in ghost so that the user has an unimpeded view of the selected part but can also view the selected part in context, i.e., in relation to adjacent parts or surroundings. Further, the parts removed may be only those parts in front of the selected part in a chosen or selected area of the screen, or may be all of the parts on the screen. Thus, in the former case, the user may select the size of an area of the image in front of the selected part in which obstacles or impediments are to be removed so that a corresponding area of the selected part can be viewed.

Once the user selects the part to be followed, in one preferred embodiment of the invention, the user may select a perspective or point of view from which the model is viewed and presented on the screen. Preferably, several different modes or options are available to the user. For example, in one mode, the point of view is not changed automatically. In a further mode, a cursor is used and the point of view is always centered on the cursor. In another mode using a cursor, the point of view is changed when the cursor comes close to a boundary of the current view being provided.

In the embodiment of Figure 1, the user follows the part manually by moving a cursor along the part. In an alternative embodiment, an automatic following option is provided. By selecting an automatic following option, the user views an image or an animation from a chosen perspective or point of view, and the part is automatically followed throughout the three-dimensional image. In this embodiment, controls are preferably provided that enable the user to control the following speed, pause the process, and the like. As discussed in more detail below, if the manual (cursor) option is selected, the cursor is preferably constrained in movement to the selected part to be followed.

As discussed above, in a preferred embodiment, any obstacles that impede the view of the selected part within the three-dimensional image are automatically removed in a first step. In one implementation, any view-impeding obstacles or objects are removed, down to the selected part, as determined from the perspective or point of view initially selected by the user. The viewing areas may follow the projection of a cursor or other indicator onto the geometry of the part that is of interest, i.e., a surface, curve, edge or vertex. For example, for a curve, the selected viewing area may be a circle centered on the point nearest the picking line on the curve.

After the part is selected, in a next step, as indicated in step 14, the user moves a cursor, pointer, or some other icon (hereinafter referred to as a cursor), along the selected part, so as to follow the part throughout the three-dimensional image or model. As indicated above, the viewing area or viewport provided may encompass a section of the screen or the entire screen.

As shown in step 16, if, during this movement of the cursor indicated in step 14, other obstacles in the three-dimensional image block viewing of the selected part, or otherwise impede viewing thereof as the user moves the cursor along the selected part, the obstacles impeding the view of the part are automatically removed. This enables the user to view of the selected part as the cursor is moved therealong. As indicated above, in one preferred embodiment, the "removed" obstacles may still be shown in ghost.

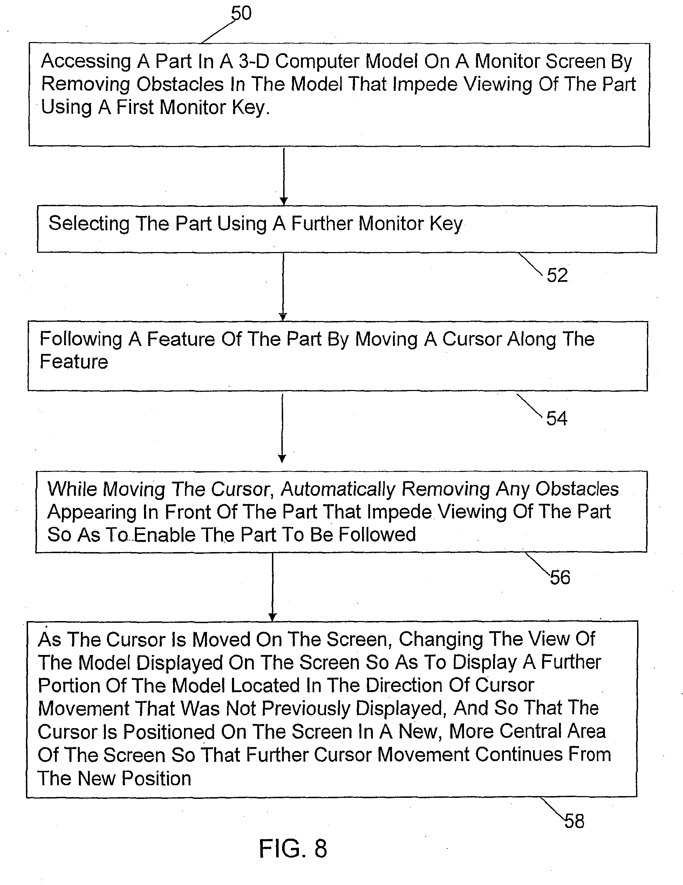

As is also indicated by block 16, the screen image display is repositioned to display a further portion of the model that is located in the direction of cursor movement and that was not previously displayed so as to enable the cursor to follow the image beyond an initial screen display. This feature, and further aspects thereof, are discussed in more detail below in connection with Figure 8.

Various known methods may be used in removing or eliminating the obstacles blocking viewing of the selected part. For example, one method concerns testing the depth of the pixels in the area surrounding the selected part by using what is generally referred to as a z-buffer, i.e., a buffer memory of depth z. The use of the z-buffer technique allows revealing of the selected part when hidden, through the use of a memory capacity with dimensions of the image in two-dimensions. Thus, on the 3-D image, a pixel being tested is replaced only if the preceding z value in memory (the depth value) is more than the current z value of the tested pixel. This procedure is usually referred to as a depth test.

Returning to step 14 of the preferred embodiment shown in Figure 1, in this embodiment, as indicated, the cursor is constrained to the part, i.e., the movement of the cursor on the screen is constrained to move only within and along the selected part and the cursor disappears or cannot be moved when the control device (mouse) provides for movement off of the part. Thus, in the preferred implementation, when the user moves the cursor, the cursor can only move along and within the desired part to be followed. For example, in following a pipe, if the cursor is positioned on the pipe in the middle of the pipe, and the movements of the cursor are restricted to the pipe, the cursor thus will be able to move to the right or left to the ends of the pipe, and up or down for half the diameter of the pipe. Further, in the preferred embodiment, in following the selected part, the movements of the associated input or control device, such as a mouse, will be applied to position of the cursor so long as (i.e., only when) a component of that movement of the input device produces movement of the cursor within the constraints of the pipe, i.e., movement of the mouse will not result in movement of the cursor if such cursor movement would be outside of the confines of the pipe.

In accordance with a further preferred embodiment, an audio output is provided which continually sounds while the cursor is moved along the selected part and which ceases when the part is no longer followed. The feature can be used when the cursor is not directly constrained to the part or in combination with such constraint. In other words, in one preferred embodiment, an audio output is employed to constrain movement of the cursor by alerting the user that the cursor has moved off on the selected part. In this regard, a simple audio alert can be provided if the cursor moves off of the part. In another implementation, an audio alert is provided whenever the cursor encounters a discontinuity or an unwarranted condition occurs.

It will be understood that in some instances, a series of points are sufficient to describe the geometry of the part. For example, in welding points between parts, for reference points on a vehicle, and for a path for a procedure, a series of points may be sufficient.

In cases where the part to be followed has a small cross section (e.g., wherein the part is a wire, a vein, or another elongate shape), the geometry may be defined by a parametric curvilinear model (as represented by x=f(t), y=f(t), z=f(t)). In such cases, in accordance with one advantageous embodiment, in order to determine the viewing plane, the tangent to the curvilinear model is determined, and the viewing plane is defined as a plane orthogonal to the tangent. The viewpoint of the user will thus be included in that viewing plane.

In cases where the selected part, such as a pipe, is sufficiently large, the normal to the surface of the selected pipe part from the viewpoint of the user can be directly computed. Thus, there are a number of different ways in which the selected part can be represented, and a number of different ways in which the viewpoint of the user can be determined.

In preferred embodiments, where the part is defined using a curvilinear model, the orientation of the computer model moves in such a way that a constant angle is maintained between the view or viewpoint and a tangent to the curve. Preferably, where the geometry of the selected part to be followed is a surface, the angle between the viewpoint and a normal to the surface is maintained. On the other hand, where the geometry of the selected part is simply a point, the view is not automatically changed.

Considering an example of the changes in the position and orientation of the view provided to a user, and referring again to the example of a pipe, considering the case wherein the pipe is being followed to left as viewed and there is a bend or turn in the pipe of ninety degrees away from the user (e.g., a 90° elbow), the model will rotate to right as the cursor moves around the bend and will cease to rotate after the ninety degree rotation has been completed.

The point of view is also adjusted when discontinuities are encountered. For example, when a ninety degree turn is encountered in a conduit or pipe, there will be a rapid movement in the orientation of the model from the current orientation to a new orientation. In one preferred embodiment, the user is alerted to a discontinuity by audio signal or by an alert on the screen so as to alert the user that a decision needs to be made and thus assist the user in making the proper decision.

In a preferred implementation, should a discontinuity occur wherein the part being followed divides or separates into multiple parts or paths (e.g., wherein a wiring cable separates into three different smaller cables), a pie chart with the possible choices may be superimposed over the discontinuity so as to enable the user to decide which part or path to follow.

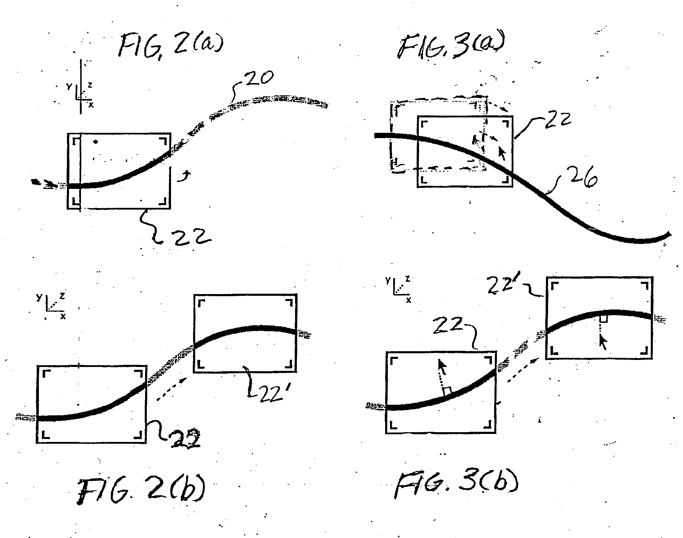

As indicated above, in preferred embodiments, when the cursor comes to a point at the boundary edge of the viewing area, the viewing area presented will automatically be adjusted to bring the next adjacent portion of the image or model into view. Thus, referring to Figures 2(a) and 2(b), a curvilinear part 20 to be followed is shown in Figure 2(a) in dashed lines outside of a viewing area or viewport 22 and shown as solid line within viewport 22. As indicated in Figure 2(b), the viewport 22 will translate to left along the part 20 as the part is followed. A new ("n") position of the viewport along part 20 is shown at 22'. Thus, in these embodiments, the perspective or point of view translates to the left as the cursor approaches or comes to point at the left boundary of the viewport.

Similar translations of the viewport 22 are shown in Figure 3(a) for a different part 24, i.e., a part of a different curvature, and in Figure 3(b), for a similar part 26, but with a view normal to the part 26, as indicated.

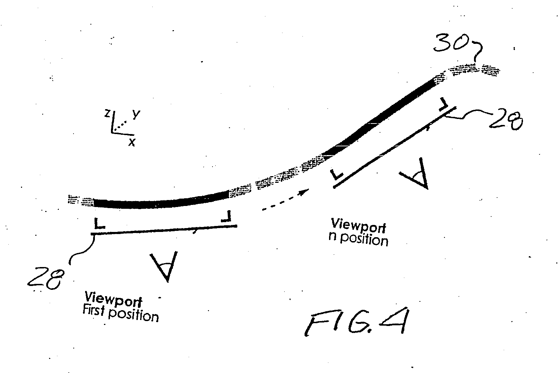

Figure 4 is a plan view showing movement of a viewport 28 between a first position (at the left) and a new "n" position along a selected part 30 so as to enable viewing of two different portions of part 30. These parts are again shown in solid lines.

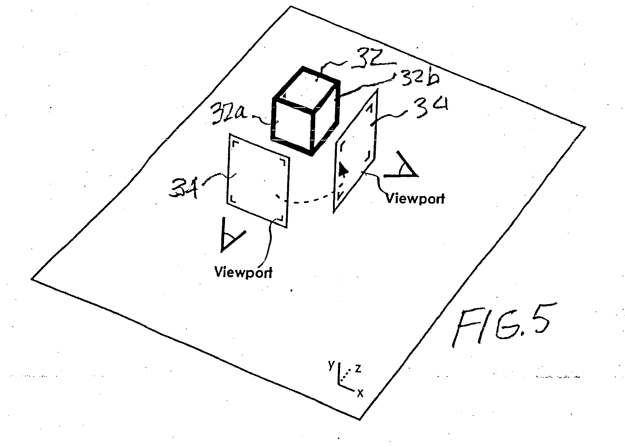

Figure 5 shows a cubic model 32 and illustrates how the position of a viewport 34 abruptly changes from a first position, indicated at 34a, in front of a first face 32a of the cubic model 32 to a second position, indicated at 34b, in front of the adjacent face 34b of the model 32. In embodiments described above, this occurs when a cursor comes to the right edge (as viewed in Figure 5) of face 32a of model 32.

In preferred embodiments, using a cursor, in the case of an edge, the orientation of the model follows the bisector plane of the "angle" formed by the two faces at the point of a cursor.

For the case of vertex discontinuity, in one implementation, when the cursor nears a vertex, the movement of the cursor is determined by the intersection of the constraints on the vertex and the movement of the mouse or other control device controlling the cursor. The face or edge that is selected will be that which is closest to the movement of the mouse. In the case where only one face is visible and the other faces are hidden, an exception is made, and a movement outside the vertex away from the visible face will be interpreted as a movement towards one of the neighboring hidden faces. The face selected will be the one having the highest unconstrained component of the movement.

Turning now to an example regarding the alignment of a camera used in providing the 3-D image, and, in particular, regarding the positioning and change in orientation of the view provided by such a camera, let C represent the coordinate system of the camera expressed in the world coordinate system (WCS) so Cx is the x-axis of the camera view, Cy is the y-axis of the camera view and Cz is the viewing direction of the camera (the z-axis of the view). C determines, in WCS, the point of view and the orientation of the view. It will be appreciated that the projection of the camera may be perspective or orthographic. In addition, let P represent the picking line (a line in three-dimensions line drawn through the cursor) and Up the absolute vertical of the world.

Now considering R, a point on the curve of the selected part defined in three-dimensional coordinates (R.Vx, R.Vy, and R.Vz), R.Origin is defined as the nearest point of the Cz axis on the curve, and R.Vx equals T, where T is the tangent of the curve at R.Origin. If T is colinear with Up, then R.Vy is an arbitrary axis non-colinear with T. Otherwise, R.Vy is Up. R.Vz is the cross product (R.Vx, R.Vy). Considering Rcursor, a three-dimensional coordinate system computed around the cursor, Rcursor.Origin is the nearest point of P on the curve; Rcursor.Vx equals Tcursor where Tcursor is the tangent of the curve at Rcursor.origin. If Tcursor is colinear with Up, then Rcursor.Vy is an arbitrary axis non-colinear with Tcursor. Otherwise, Rcursor.Vy equals Up. Rcursor.Vz is the cross product (Rcursor.Vx, Rcursor.Vy).

In order to compute the new position of the camera which follows the curve, the following method is used: search to compute Cnew, the three-dimensional coordinate system expressed in WCS which defines the position of the camera necessary to follow the curve. Ctemp is C transformed from the world coordinate system to the R coordinate system. Ctemp is now considered as being expressed in Rcursor, and the "reverse" transformation is computed to express Ctemp in the world coordinate system. Thus, Cnew equals Ctemp as transformed from Rcursor to the WCS. Ccursor determines the new point of a view in the world coordinate system and the new orientation of the view.

In another embodiment, the displacement is "smoothed" and an intermediate point between R.Origin and Rcursor.Origin on the curve is considered. Where the geometry of the part is a surface, the method is the same but T is replaced by N, which is the normal to the face near the cursor.

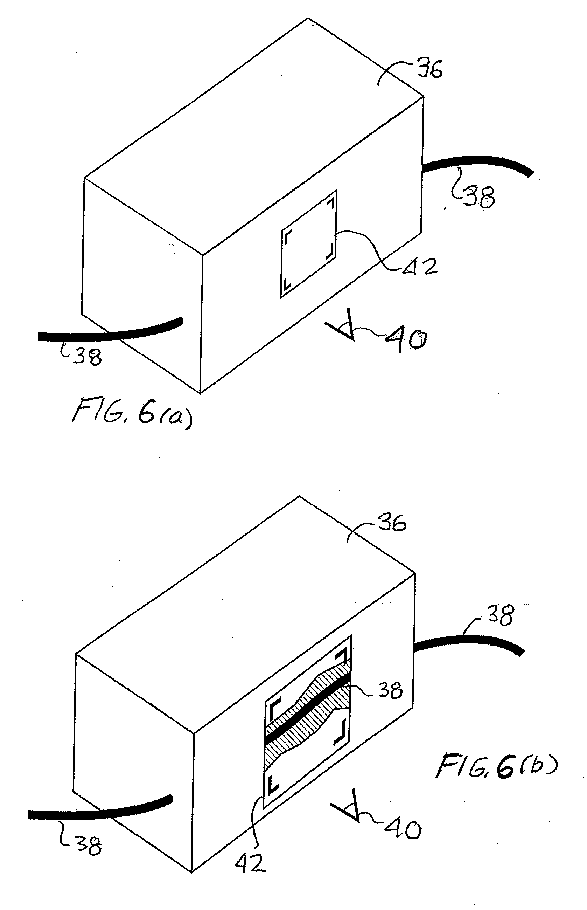

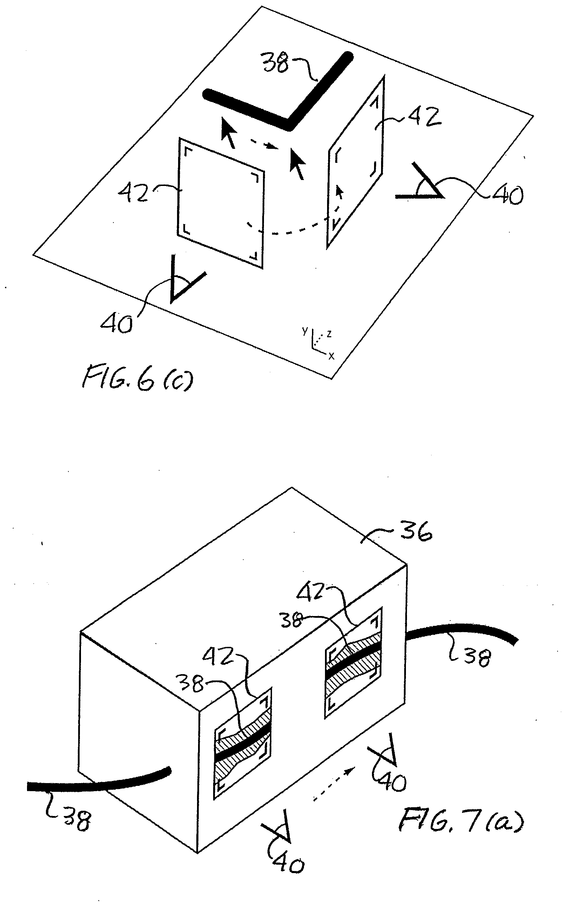

Referring now to Figures 6(a) and 6(b), and referring first to Figure 6(a), a perspective view is provided of a three dimensional image or computer model 36, showing the part to be followed, in the form of a curved line 38, as well as the current viewpoint 40 and a viewport or screen 42. In Figure 6(a), the follower system with the not enabled and the selected part, viz., curved line 38, is not visible to the user. In Figure 6(b), the follower system is enabled and the selected part 38 within the three-dimensional image or computer model is visible through the screen of viewport 42. In this embodiment, the curve is visible over the entire screen 42. Further, the view follows the cursor only with respect to the orientation of the user, as indicated in Figure 6(c) which is similar to Figure 5 described above.

Referring to Figures 7(a) to 7(b), three different embodiments are illustrated wherein the follower system is enabled. Figures 7(a) to 7(b) are similar to Figures 6(a) and 6(b) and like elements have been given the same reference numerals. In Figure 7(a), the view 40 of the screen 42 follows the cursor from a first position (at the right) to an "n" position, and the curve 38 is visible over the entire screen 42.

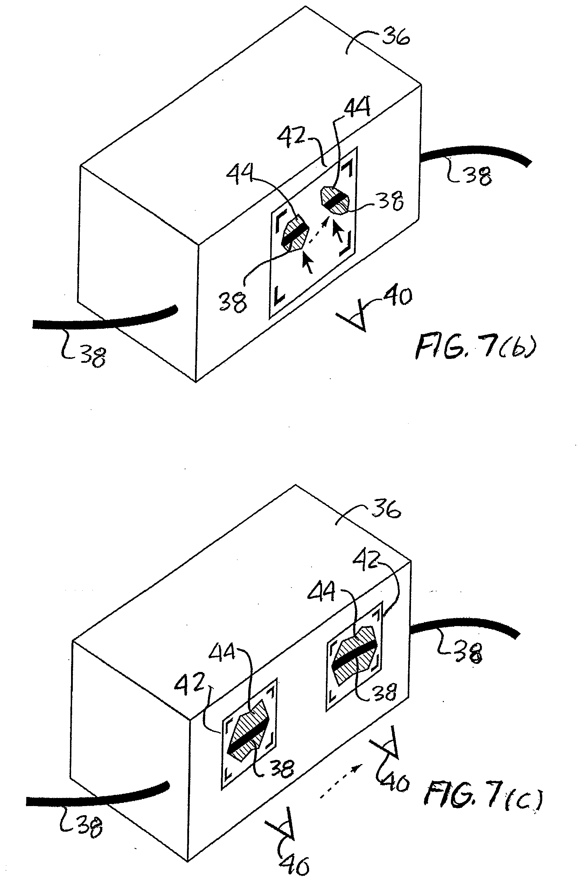

In the embodiment of Figure 7(b), the follower system is again enabled, but the view 40 does not follow the cursor on the screen 42. Instead, a cutaway area 44 on the screen 42 follows the cursor as the cursor moves along the part 36 so that different portions of the part 38 are shown through the associated cutaway 44 on the screen 40.

In the embodiment of Figure 7(c), the follower system is again enabled, and, as in Figure 7(a) the view 40 follows the cursor so that the view 40 changes from a first position (at the right) to an "n" position, as indicated in Figure 7(c), but in contrast to Figure 7(a), the part (curve) 38 is only visible in the area of cutaway 44.

Referring to Figure 8, there is shown a flowchart of a follower method in accordance with a further embodiment of the invention. In this embodiment, in a first step 50, a monitor key (e.g., a TAB key) is used in accessing a part or object (e.g., a pipe) to be selected by removing the obstacles (e.g., other parts or objects) in front of the part or object so as to permit viewing thereof.

In the next step, step 52, the part is selected using further monitor key, and, as indicated by step 54, a feature of the part (e.g., the extent thereof) is followed throughout by moving a cursor along the part.

As indicated by block 56, while the cursor is moved along the part, any obstacle (other part, object, etc) appearing in front of the part that prevents viewing of the part is removed or otherwise negated so as to enable continued viewing and following of the part. As described above, this removal or negating of an obstacle can be achieved either by actually removing the obstacle completely from the screen image or by showing the obstacle in ghost or phantom lines so that the part can be viewed through the obstacle. Preferably, if, as the cursor continues to be moved along the feature, the obstacle no longer impedes viewing of the part in an area of he cursor, the obstacle (further part or object) is restored and reappears as before, i.e., as a solid part or object.

In accordance with a further feature of this embodiment, as the part is being followed, the view, i.e., the image of the model on the monitor screen, is changed to reveal more of the complete model in the direction of cursor movement so that the part can continue to be followed. In one preferred embodiment, as indicated by block 58, as the cursor is moved along the part, the view of the model displayed on the screen is changed so as to display a further portion of the model located in the direction of cursor movement that was not previously displayed. Further, as is also indicated by block 58, in a preferred embodiment, when the cursor, in following the feature, is moved, i.e., repositioned, to a central area of the screen when the view is repositioned. In one embodiment, such repositioning occurs when the cursor encounters a screen boundary (e.g., one edge of the monitor screen). In other words, when the cursor reaches the screen edge, the cursor is repositioned (e.g., recentered) on the screen so that continued cursor movement can take place and will continue from this new, more central position. In a preferred embodiment, the repositioning or recentering of the cursor occurs simultaneously and automatically with the repositioning (recentering) of the view as the cursor moves in a given direction, and this repositioning of the view and cursor is not dependent on the cursor encountering a screen boundary.

In accordance with a further feature of some preferred embodiments, information of interest is displayed during the follower operation, i.e., while the selected part is being followed. Typically, measurements are carried out in spatial xyz coordinates and not in a curvilinear coordinate system. In one advantageous embodiment, the length of the curve on the surface, or the length of an edge, is computed and displayed. For example, a measurement may be made of the length of a pipe, or the length of a portion of pipe, from the point of pipe entry up to a position at which an obstruction within the pipe may have occurred.

In another implementation, marks are provided along the selected part showing, for example, the length of the curvature along the pipe or the surface to each specific point. This information will again be displayed.

In accordance with a further advantageous feature, follower markers are provided on the 3-D scene to enable the follower operation, i.e., to determine when the follower system is to be enabled and when the system is to be disabled. For example, 3D or 2D markers may be created on the scene, such as 3D rings disposed at a particular position on a curve. A relatively large number of markers may be created at different abscissas of curves, or placed directly on 3D faces, or 3D points. For example, in one implementation, if the user presses the left mouse button when the cursor is on a marker, the follower system is enabled with respect to the linked geometry (i.e., the curve or surface under the marker), and when the user releases the left mouse button, the follower system is disabled, and the marker is displaced to a new position for later use.

Other features of a preferred method include computing measurements of the surfaces and other aspects of the part based on the above calculations. In an advantageous embodiment, the method may compute distances and lengths using curvilinear measurements.

In another advantageous implementation using markers, the user may also apply markers to specific points to compute the distances between the selected points. The user may create markers at different curve abscissa, or place then directly onto three-dimensional faces or points. For example, if a user depresses the left mouse button when the cursor is on a marker, the follower is enabled on the linked geometry (the curve or surface under the marker), and when the user releases the left mouse button, the follower mechanism is disabled, and the marker is displaced to the new position for later use.

As indicated above, obstacles impeding following of the selected part may be removed from the entire screen or only part of the screen. Provision is preferably made for the user to define the size and shape of the area from which obstructions or obstacles are removed. Thus, while the area may be the entire screen, the area may be limited to a circumscribed area around the selected part, depending on the application and the wishes of the user.

According to a further feature, the followed path may be used to generate an animation or AVI. Also, the follower can be combined with a GPS system as discussed in more detail below.

In preferred embodiments, the user can use the follower system to follow a selected part in real time and in its actual location, using a laptop or portable PC, so as, e.g., to permit a user to follow a buried pipe or a pipe disposed within a wall. In this example, when the pipe is accessible, a reset to "zero" is carried out so as to provide a real-location "read" on the 3D image as (i) the position of the pipe and (ii) the depth at which the pipe is buried. As discussed above, similar applications can be used in following ducts in buildings, pipes in refineries or chemical plants and in many other situations.

As was also discussed above, in preferred embodiments, the model can turn or rotate to follow a turn or bend in the selected part (e.g., a ninety degree elbow in a pipe or electrical conduit), and in this case, the three-dimensional image on the screen will enable a user to reference the current viewing coordinates of the model with the physical spatial coordinates of the user.

The follower system can also be used with a six degrees of freedom device that provides an indication of position and orientation in local or global coordinates. Devices such as those made by Pohlhemus can be used to provide the six local degrees of freedom. Global coordinates can also be provided in other ways such as, for example, coupling a GPS to a triaxial accelerometer.

In accordance with a further advantageous feature of the follower system, combined viewing of both the model and the physical objects used implementing the model is provided. In one implementation, a tablet PC is fitted with a follower system and the measurements are used to control the viewport of the software. The tablet PC can be held at a fixed distance (for example, at arms length), and the viewport of the software will cover viewing of the obstructed view of the selected part (such as a pipe) and provide, in situ, the view of the selected part.

In another advantageous implementation, a small display is mounted in proximity to one eye of the viewer. This eye receives an image which is, for example, the unobstructed view of the model of the part, while the naked eye, with a parallax difference, sees the obstructed view.

In another implementation, each eye receives respective images from separate displays. The image generated for each eye is suitably compensated to provide proper registration, so that the perceived image of the model and the perceived image of the physical object coincide in position and orientation. The virtual image of the model and the physical image can be mixed, for example, by using optical elements with a semi-reflective coating.

In some embodiments, when the model turns to follow, for example, a ninety degree elbow in a pipe, a three-dimensional referential object is provided on the screen which enables the user to reference the current viewing coordinates of the model with the physical spatial coordinates of the user.

In a further embodiment, a cutting plane is positioned so as to cut through, i.e., provide a cross sectional view of, the selected object. This would be useful, for example, wherein a plurality of pipes are disposed within a larger tube. Such a cutting plane would be normal to the viewpoint of the user and positioning thereof would follow the movement of a cursor or the like as described above for previous embodiments.

While the invention has been described in connection with a number of preferred embodiments, it is to be understood that the specific methods and systems which have been described are merely illustrative of different aspects and principles of the invention, and that various modifications may be made in the methods and systems described without departing from the scope of the invention.

## Claims

1. A computer-implemented method for following a geometrical feature of a selected part in a three-dimensional computer model including the part, said model being displayed on a computer screen and said method comprising the steps of:
- selecting a part from a three-dimensional computer model; and
- following the part along a geometrical feature thereof while simultaneously and automatically removing any obstacles in the three-dimensional model that impede viewing of the part so as to permit viewing of the part as the part is being followed; and
- following the selected part comprises moving a cursor along the selected part while constraining movement of the cursor to the selected part; and movement of an input device for controlling the cursor effects movement of the cursor only when a component of the movement of the cursor is within the limits of the selected part.

2. The method of claim 1 further comprising repositioning the model on the computer screen so as to display a further portion of the model that was not previously displayed and that is located in the direction in which the part is being followed to thereby enable the feature to be followed further in said direction.

3. The method of claim 1 wherein selection of the part includes initially automatically removing any obstacles from the three-dimensional model that impede viewing of the selected part.

4. The method of claim 1 wherein selecting the part from the three-dimensional model comprises using a cursor to select the part.

5. The method of claim 1 wherein selecting the part from the three-dimensional model comprises selecting the part from a directory tree structure.

6. The method of claim 1 wherein selecting the part from the three-dimensional model comprises filtering out all layers of the three-dimensional model except a layer containing the part.

7. The method of claim 1 wherein the step of following the part comprising automatically following the part at a predetermined speed selected by the user.

8. The method of claim 1 wherein the step of following the part comprises using a cursor to follow the selected part on a screen displaying the three-dimensional image.

9. The method of claim 1 wherein the part is represented by a parametric curvilinear model, and a viewpoint for viewing the curvilinear model is provided within a viewing plane normal to a line tangent to the curvilinear model.

10. The method of claim 9 wherein a new tangent is established for each change in the geometry of the curvilinear model.

11. The method of claim 1 wherein a plane normal to a selected surface of the selected part is computed, and a point of view, from which the selected part is viewed in the three-dimensional computer model, is defined with respect to the normal plane.

12. The method of claim 1 wherein the three-dimensional model comprises a volumetric model, wherein the selected part is followed using a cursor and wherein movement of the cursor is constrained to the selected part using values within one of a scalar field, a vector field and a tensorial field.

13. The method of claim 1 wherein an audio output is used in association with said following of the selected part.

14. The method of claim 1 wherein orientation of the point of view of the three-dimensional model presented to a user is varied such that an angle defined between a line coincident with the direction of view and a tangent to the geometrical feature remains constant.

15. The method of claim 14 wherein the geometrical feature is a surface of the selected part, and wherein an angle between a line coincident with the direction of view and a line normal to the surface is maintained constant.

16. The method of claim 1 wherein when there is a change in the continuity of the selected part the model is immediately moved to a new orientation from the orientation prior to the change in continuity.

17. The method according to one of the claims 1 to 3 wherein, in the automatically removing step, obstacles that are removed remain as ghost images on the screen.

## Patentansprüche

1. Computerimplementiertes Verfahren zum Verfolgen eines geometrischen Merkmals eines ausgewählten Teils in einem dreidimensionalen Computermodell, welches das Teil beinhaltet, wobei das Modell auf einem Computerbildschirm angezeigt wird und das Verfahren folgende Schritte umfasst:
- Auswählen eines Teils aus einem dreidimensionalen Computermodell; und
- Verfolgen des Teils entlang eines geometrischen Merkmals davon, während gleichzeitig und automatisch jegliche Hindernisse in dem dreidimensionalen Modell entfernt werden, welche die Betrachtung des Teils beeinträchtigen, so dass die Betrachtung des Teils ermöglicht wird, während das Teil verfolgt wird; und
- Verfolgen des ausgewählten Teils, was das Bewegen eines Cursors entlang des ausgewählten Teils umfasst, während die Bewegung des Cursors auf das ausgewählte Teil beschränkt ist, und die Bewegung eines Eingabegerätes zum Steuern des Cursors Bewegungen des Cursors nur dann bewirkt, wenn eine Komponente der Bewegung des Cursors innerhalb der Grenzen das ausgewählten Teils liegt.

2. Verfahren nach Anspruch 1, ferner das Neupositionieren des Modells auf dem Computerbildschirm umfassend, so dass ein weiterer Abschnitt des Modells angezeigt wird, der zuvor nicht angezeigt wurde und der sich in der Richtung befindet, in welcher das Teil verfolgt wird, um dadurch zu ermöglichen, dass das Merkmal weiter in der Richtung verfolgt wird.

3. Verfahren nach Anspruch 1, wobei das Auswählen des Teils das anfänglich automatische Entfernen jeglicher Hindernisse von dem dreidimensionalen Modell, welche die Betrachtung des Teils beeinträchtigen, beinhaltet.

4. Verfahren nach Anspruch 1, wobei das Auswählen des Teils aus dem dreidimensionalen Modell das Verwenden eines Cursors zum Auswählen des Teils umfasst.

5. Verfahren nach Anspruch 1, wobei das Auswählen des Teils aus dem dreidimensionalen Modell das Auswählen des Teils aus einer Verzeichnisbaumstruktur umfasst.

6. Verfahren nach Anspruch 1, wobei das Auswählen des Teils aus dem dreidimensionalen Modell das Herausfiltern aller Schichten des dreidimensionalen Modells mit Ausnahme der Schicht, die das Teil enthält, umfasst.

7. Verfahren nach Anspruch 1, wobei der Schritt des Verfolgens des Teils das automatische Verfolgen des Teils mit einer festgelegten Geschwindigkeit, die durch den Benutzer ausgewählt wird, umfasst.

8. Verfahren nach Anspruch 1, wobei der Schritt des Verfolgens des Teils das Verwenden eines Cursors zum Verfolgen des ausgewählten Teils auf einem Bildschirm, der das dreidimensionale Bild anzeigt, umfasst.

9. Verfahren nach Anspruch 1, wobei der Teil durch ein parametrisches kurvenförmiges Modell dargestellt wird und ein Betrachtungspunkt, zum Betrachten des kurvenförmigen Modells, in einer Betrachtungsebene, die senkrecht zu einer Linie liegt, die das kurvenförmige Modell tangiert, bereitgestellt wird.

10. Verfahren nach Anspruch 9, wobei für jede Veränderung in der Geometrie des kurvenförmigen Modells eine neue Tangente erstellt wird.

11. Verfahren nach Anspruch 1, wobei eine Ebene errechnet wird, die senkrecht zu einer ausgewählten Oberfläche des ausgewählten Teils liegt, und ein Betrachtungspunkt, von dem aus das ausgewählte Teil in dem dreidimensionalen Computermodell betrachtet wird, in Bezug auf die senkrechte Ebene definiert wird.

12. Verfahren nach Anspruch 1, wobei das dreidimensionale Modell ein volumetrisches Modell umfasst, wobei das ausgewählte Teil unter Verwendung eines Cursors verfolgt wird und wobei die Bewegung des Cursors unter Verwendung von Werten in einem Skalarfeld oder in einem Vektorfeld oder in einem Tensorfeld auf das ausgewählte Teil beschränkt wird.

13. Verfahren nach Anspruch 1, wobei in Verbindung mit dem Verfolgen des ausgewählten Teils eine Audioausgabe verwendet wird.

14. Verfahren nach Anspruch 1, wobei die Ausrichtung des Betrachtungspunktes des dreidimensionalen Modells, das einem Benutzer präsentiert wird, derart verändert wird, dass ein Winkel, der zwischen einer Linie, die mit der Betrachtungsrichtung zusammenfällt, und einer Tangente des geometrischen Merkmals definiert ist, konstant bleibt.

15. Verfahren nach Anspruch 14, wobei das geometrische Merkmal eine Oberfläche des ausgewählten Teils ist und wobei ein Winkel zwischen einer Linie, die mit der Betrachtungsrichtung zusammenfällt, und einer Linie, die senkrecht zur Oberfläche liegt, konstant gehalten wird.

16. Verfahren nach Anspruch 1, wobei, wenn eine Veränderung in der Kontinuität des ausgewählten Teils vorliegt, das Modell sofort von der Ausrichtung vor der Veränderung in der Kontinuität in eine neue Ausrichtung bewegt wird.

17. Verfahren nach einem der Ansprüche 1 bis 3, wobei im Schritt des automatischen Entfernens Hindernisse, die entfernt werden, als Geistbilder auf dem Bildschirm verbleiben.

## Revendications

1. Procédé mis en œuvre par ordinateur pour suivre une caractéristique géométrique d'une pièce sélectionnée dans un modèle informatique tridimensionnel comprenant la pièce, ledit modèle étant affiché sur un écran d'ordinateur et ledit procédé comprenant :
- une sélection d'une pièce à partir d'un modèle informatique tridimensionnel ; et
- un suivi de la pièce le long d'une caractéristique géométrique connexe tout en supprimant simultanément et automatiquement tout obstacle dans le modèle tridimensionnel qui empêche la visualisation de la pièce de façon à permettre la visualisation de la pièce pendant que la pièce est suivie ; et
- le suivi de la pièce sélectionnée comprend un déplacement d'un curseur le long de la pièce sélectionnée tout en limitant un déplacement du curseur à la pièce sélectionnée ; et un déplacement d'un dispositif d'entrée pour commander le curseur effectue le déplacement du curseur seulement lorsqu'une composante du déplacement du curseur est dans les limites de la pièce sélectionnée.

2. Procédé selon la revendication 1 comprenant en outre un repositionnement du modèle sur l'écran d'ordinateur de manière à afficher une autre partie du modèle qui n'était pas précédemment affichée et qui est située dans la direction dans laquelle la pièce est suivie de manière à permettre par conséquent à la caractéristique d'être suivie en outre dans ladite direction.

3. Procédé selon la revendication 1 dans lequel la sélection de la pièce inclut une suppression initiale et automatique de tout obstacle du modèle tridimensionnel qui empêche la visualisation de la pièce sélectionnée.

4. Procédé selon la revendication 1 dans lequel la sélection de la pièce à partir du modèle tridimensionnel comprend une utilisation d'un curseur pour sélectionner la pièce.

5. Procédé selon la revendication 1 dans lequel la sélection de la pièce à partir du modèle tridimensionnel comprend une sélection de la pièce dans une arborescence de répertoire.

6. Procédé selon la revendication 1 dans lequel la sélection de la pièce à partir du modèle tridimensionnel comprend un filtrage de toutes les couches du modèle tridimensionnel hormis une couche contenant la pièce.

7. Procédé selon la revendication 1 dans lequel le suivi de la pièce comprend un suivi automatique de la pièce à une vitesse prédéterminée sélectionnée par l'utilisateur.

8. Procédé selon la revendication 1 dans lequel le suivi de la pièce comprend une utilisation d'un curseur pour suivre la pièce sélectionnée sur un écran affichant l'image tridimensionnelle.

9. Procédé selon la revendication 1 dans lequel la pièce est représentée par un modèle curviligne paramétrique, et un point de vue pour visualiser le modèle curviligne est fourni dans un plan de visualisation normal à une ligne tangente au modèle curviligne.

10. Procédé selon la revendication 9 dans lequel une nouvelle tangente est établie pour chaque changement dans la géométrie du modèle curviligne.

11. Procédé selon la revendication 1 dans lequel un plan normal à une surface sélectionnée de la pièce sélectionnée est calculé, et un point de vue, à partir duquel la pièce sélectionnée est visualisée dans le modèle informatique tridimensionnel, est défini par rapport au plan normal.

12. Procédé selon la revendication 1 dans lequel le modèle tridimensionnel comprend un modèle volumétrique, dans lequel la pièce sélectionnée est suivie en utilisant un curseur et dans lequel un déplacement du curseur est limité à la pièce sélectionnée en utilisant des valeurs dans l'un parmi un champ scalaire, un champ vectoriel et un champ tensoriel.

13. Procédé selon la revendication 1 dans lequel une sortie audio est utilisée en association avec ledit suivi de la pièce sélectionnée.

14. Procédé selon la revendication 1 dans lequel une orientation du point de vue du modèle tridimensionnel présenté à un utilisateur est variée de sorte qu'un angle défini entre une ligne coïncidant avec la direction de vue et une tangente à la caractéristique géométrique reste constant.

15. Procédé selon la revendication 14 dans lequel la caractéristique géométrique est une surface de la pièce sélectionnée, et dans lequel un angle entre une ligne coïncidant avec la direction de vue et une ligne normale à la surface est maintenu constant.

16. Procédé selon la revendication 1 dans lequel lorsqu'il existe un changement dans la continuité de la pièce sélectionnée le modèle est immédiatement déplacé vers une nouvelle orientation à partir de l'orientation précédant le changement dans la continuité.

17. Procédé selon l'une quelconque des revendications 1 à 3 dans lequel, dans la suppression automatique, les obstacles qui sont supprimés restent sous la forme d'images fantômes sur l'écran.
